# EUROPÄISCHE PATENTSCHRIFT

(11) **EP 0 843 711 B1**
(45) Veröffentlichungstag und Bekanntmachung des Hinweises auf die Patenterteilung: **27.09.2000**
(21) Anmeldenummer: 96928439.7
(22) Anmeldetag: 09.08.1996
(51) Int. Cl.: C09K 3/10, C08L 23/02, B65D 53/00

(54) **MECHANISCH DICHTENDER VERSCHLUSS FÜR GEFÄSSE**
MECHANICALLY SEALING CLOSURE FOR RECEPTACLES
FERMETURE POUR ASSURER MECANIQUEMENT L'ETANCHEITE DE RECIPIENTS

(30) Priorität: 09.08.1995 DE 19529230
(43) Veröffentlichungstag der Anmeldung: 27.05.1998
(73) Patentinhaber: PPG Industries Ohio, Inc., Cleveland, OH 44111 (US)
(72) Erfinder: OSTERKAMP, Doris, D-48249 Dülmen (DE); NÜSSEN, Peter, D-48163 Münster (DE)
(74) Vertreter: Sternagel, Fleischer, Godemeyer & Partner Patentanwälte
(86) Internationale Anmeldenummer: EP9603526
(87) Internationale Veröffentlichungsnummer: WO9706221

(56) Entgegenhaltungen:
- EP-A- 0 205 914
- EP-A- 0 339 831
- WO-A-95/00599
- WO-A-95/05426
- DE-A- 1 544 989
- DE-A- 4 229 923

## Beschreibung

Die vorliegende Erfindung betrifft einen mechanisch dichtenden Verschluß, vorzugsweise aus Metall oder Kunststoff, mit einer Inneneinlage als Dichtungselement für Gefäße, insbesondere für Flaschen und Gläser.

Gefäßverschlüsse müssen sich dafür eignen, einfach und trotzdem zuverlässig dichtend am Gefäß angebracht zu werden, wobei üblicherweise keine Nachbehandlungen erforderlich sein dürfen und die Abmessungen der Gefäßöffnung sowie deren Erhaltungszustand und Rauheit (beispielsweise bei Pfandflaschen) sehr verschieden sein können. Es ist daher schon seit langem bekannt, Gefäßverschlüsse wie beispielsweise Kronenkorken auf ihrer dem Gefäß zugewandten Innenseite mit einem elastischen Dichtungselement zu versehen, welches bei angebrachtem Verschluß zwischen diesem und dem Gefäß eingepresst ist und die Dichtigkeit gewährleistet.

Während früher die Einlagen von Kronenkorken bzw. Flaschenschraubverschlüssen vorwiegend aus Preßkork hergestellt wurden, welcher gegebenenfalls noch mit einer dünnen Kunststoff- oder Aluminiumfolie beschichtet war, wird schon seit längerer Zeit das Dichtungselement insgesamt aus synthetischem Polymercompound hergestellt. Dafür eignen sich jedoch nur Polymercompounds, die dauerhaft und widerstandsfähig genug sind und dabei gleichzeitig die erforderliche Elastizität aufweisen.

In der Praxis wird dafür hauptsächlich PVC verwendet: auch Polyethylen sowie Gemische dieser Stoffe mit Vinylacetat bzw. Vinylacetat-Ethylen-Copolymeren sind eingesetzt worden.

Die Herstellung von Gefäßverschlüssen unter der Verwendung solcher Polymercompounds ist beispielsweise in der DE-AS 2() 33 064 und der DE-OS 30 21 488 beschrieben

Diese bekannten Polymercompounds haben jedoch noch erhebliche Nachteile. Die Verwendung von PVC oder anderen halogenhaltigen Kunststoffen führt zu immer größer werdenden Schwierigkeiten bei der Beseitigung und Unschädlichmachung der gebrauchten, in den Hausmüll gelangenden Gefäßverschlüsse. Bei der üblichen Verbrennungsbehandlung des Hausmülls entstehen aus Halogen-Kunststoffen säurehaltige Gase, deren Freisetzung in die Umwelt schädlich ist. Auch die für die Einstellung der benötigten Dichtungseigenschaften unerläßlichen Zusätze von niedermolekularen Weichmachern (beispielsweise Phthalaten) sind aus Gründen der Gesundheitsfürsorge, nicht unbedenklich, da diese Weichmacher zum Teil aus dem PVC wieder freigegeben werden und über im Gefäß enthaltene Nahrungs- bzw. Genußmittel in den menschlichen Körper gelangen können. Aus diesem Grund ist der Weichmacheranteil solcher Polymermaterialien durch entsprechende Vorschrift nach oben begrenzt.

Die bisher ebenfalls verwendeten Polyethylene haben sich als Dichtungsmaterial insbesondere deshalb nicht bewährt, weil Temperaturschwankungen oder beschädigte Gefäßmündungen zu berücksichtigen sind. Polyethylen galt außerdem deshalb als nicht einsetzbar, weil für CO₂-haltige Getränke die Dichtigkeit als nicht ausreichend angesehen wurde.

Aufgabe der Vorliegenden Erfindung ist es daher, einen mechanisch dichtenden Verschluß, vorzugsweise aus Metall oder Kunststoff, mit einer Inneneinlage als Dichtungselement für Gefäße, insbesondere für Flaschen und Gläser, zur Verfügung zu stellen, die die notwendige Dichtigkeit gewährleistet, keine schädlichen Substanzen, insbesondere keine halogenhaltigen Bestandteile und keine niedermolekularen estergruppenhaltigen Weichmacher enthält. Außerdem soll die Inneneinlage den Beanspruchungsbedingungen üblicher Gefäßverschlüsse, insbesondere dem Pasteurisieren, standhalten können.

Diese Aufgabe wird dadurch gelöst, daß die Inneneinlage aus wenigstens einem Polyolefin besteht, das unter Einsatz von Katalysatoren aus der Gruppe der Metallocene herstellbar ist, wenigstens ein Polypropylen-Copolymerisat, das unter Verwendung eines Ziegler-Natta-Katalysatorsystems herstellbar ist, und wenigstens einen SyntheseKautschuk enthält.

Die erfindungsgemäße Inneneinlage besteht vorzugsweise aus 85 bis 15 Gew.% wenigstens eines unter Einsatz von Katalysatoren aus der Gruppe der Metallocene hergestellten Polyolefins, 15 bis 35 Gew.% wenigstens eines Polypropylen-Copolymerisats, 0 bis 25 Gew% wenigstens eines Synthesekautschuks 0 bis 20 Gew.% Füllstoffen und 0 bis 5 Gew.% weiteren Zusatzstoffen .

Besonders bevorzugt sind Zusammensetzungen aus 25 bis 60 Gew.% wenigstens eines unter Einsatz von Katalysatoren aus der Gruppe der Metallocene hergestellten Polylefins, 20 bis 25 Gew.% wenigstens eines Polypropylen-Copolymerisats, 10 bis 30 Gew% wenigstens eines Synthesekautschuks 10 bis 15 Gew.% Füllstoffen und 0 bis 5 Gew.% weiteren Zusatzstoffen.

### Polyolefine

Die erfindungsgemäß eingesetzten Polyolefine werden nach bekannten Verfahren aus Granulaten von Homopolymeren des Ethylens und Propylens sowie Copolymeren gefertigt. Zu nennen sind Polyethylen niedriger Dichte (PE-LD), mittlerer Dichte (PE-MD), hoher Dichte (PE-HD), linear low und linear very low density Polyethylen (PE-LLD, PE-VLD),sowie die Copolymeren des Ethylens mit einem oder mehreren Comonomeren aus den Gruppen der Vinylester, Vinylalkylether, ungesättigten Mono- und Dicarbonsäuren, deren Salzen, Anhydriden und Estern.

Die erfindungsgemäß einsetzbaren Polyolefine sind beispielsweise unter den Markennamen Escorene®, Lupolen®, Lotader® Lacqtene® Orevac®, Lucalen®, Dowlex®, Primacor®, Surlyn® Admer®,Novatec®, Sclair®, Stamylan® im Handel erhältlich.

### Metallocene

Bei den erfindungsgemäß eingesetzten Metallocenen handelt es sich um Cyclopentadieneyl-Metall-Komplexe.

### Polypropylen-Copolymerisate

Bei den verwendbaren Polypropylenen handelt es sich um Polypropylen-Random-Copolymerisate. Erfindungsgemäß sind statistische Polypropylen-Copolymerisate geeignet, die erhalten werden durch statistische Copolymerisation von 90 bis 99 Gew.-%, bevorzugt 93 bis 99 Gew.-%, Propylen und 1 bis 10 Gew.-%, bevorzugt 1 bis 7 Gew.-%, jeweils bezogen auf das Monomerengesamtgewicht, Comonomeren. Die statistischen Copolymere haben eine Molmassenverteilung Mw : Mn im Bereich von 2 bis 10, bevorzugt 3 bis 6, und einen Schmelzindex MFI 230 °C/2,16 kg im Bereich von 1 bis 20 g/10 min, bevorzugt im Bereich von 4 bis 15 g/10 min (gemessen nach DIN 53 735). Derartige Polypropylene sowie Verfahren zu deren Herstellung sind bekannt. Sie sind beispielsweise herstellbar durch das in der DE-A-37 30 022 beschriebene Polymerisationsverfahren unter Verwendung eines Ziegler-Natta-Katalysatorsystems. Die Propylencopolymerisate sind beispielsweise in einem Gasphasenpolymerisationsverfahren bei Temperaturen von 20 bis 160 °C und bei einem Druck von 1 bis 100 bar herstellbar. Die Molekulargewichte der Polymerisate lassen sich durch allgemein bekannte Maßnahmen regeln, zum Beispiel mittels Reglern, wie beispielsweise Wasserstoff.

Geeignete Comonomere sind beispielsweise C₂- und C₄-bis C₁₂-α-Monoolefine, insbesondere C₂- und C₄₋bis C₆-α -Monoolefine, wie Ethen, Buten-1, 4-Methylpenten-1,Hexen-1, n-Okten-1, n-Decen-1 und n-Dodecen-1.Als besonders geeignet zu nennen sind dabei Polypropylen-Random-Copolymerisate aus 1 bis 4 Gew.-% Ethylen und 99 bis 96 Gew.-% Propylen, jeweils bezogen auf das Gesamtgewicht der Monomerenzusammensetzung, wobei die Random-Copolymerisate eine Molmassenverteilung Mw : Mn im Bereich von 3 bis 6 und einen Schmelzindex MFI 230 °C/2,16 kg im Bereich von 5 bis 9 g/10 min (gemessen nach DIN 53 735) aufweisen. Diese Polypropylen-Copolymerisate haben einen Schmelzbereich von ca. 135 bis 155°C (ermittelt durch DSC).

Besonders bevorzugt sind weiterhin Polypropylen-Random-Copolymerisate aus 90 bis 97 Gew.-% Propylen, 2 bis 5 Gew.-% Ethylen und 1 bis 6 Gew.-% Buten-1, jeweils bezogen auf das Gesamtgewicht der Monomeren, die eine Molmassenverteilung Mw : Mn im Bereich von 3 bis 6 und einen Schmelzindex MFI 230°C/2,16 kg im Bereich von 4 bis 8 g/10 min aufweisen. Derartige Polypropylen-Random-Copolymerisate haben einen Schmelzbereich von 120°C bis 140°C (ermittelt durch DSC).

Alle angegebenen Werte für den Schmelzindex MFI beziehen sich auf die Messung gemäß DIN 53735.

Die beschriebenen Polypropylen-Copolymerisate sind beispielsweise erhältlich unter der Handelsbezeichnung Novolen® 3225 MCX und Novolen® 3520 LX der Firma BASF AG.

Selbstverständlich können auch Mischungen der genannten Polypropylen-Copolymerisate, bevorzugt 1:1 Mischungen eingesetzt werden.

Gemäß der vorliegenden Erfindung kann das Polypropylen-Random-Copolymerisat bis zu 50 Gew.- % durch Polypropylen-Homopolymerisat ersetzt werden. In diesem Fall wird also eine Mischung aus statistischem Polypropylen-Copolymerisat und aus Polypropylen-Homopolymerisat zu einer Dichtungseinlage verarbeitet. Geeignete Propylen-Homopolymerisate haben eine Molmassenverteilung Mw : Mn im Bereich von 2 bis 10, einen Schmelzindex MFI 230'C/2,16 kg im Bereich von 1 bis 20 g/10 min (gemessen nach DIN 53 735) und einen Isotaxie-Index im Bereich von 80 bis 99 %, bevorzugt 90 bis 98 %.

Vorzugsweise wird eine Mischung aus dem beschriebenen statistischen Polypropylen-Copolymerisat und einem Polypropylen-Homopolymerisat mit einer Molmassenverteilung Mw:Mn im Bereich von 3 bis 6 und einem Schmelzindex MFI 230 OC/2,16 kg im Bereich von 4 bis 15 g/10 min eingesetzt (gemessen nach DIN 53735). Der Isotaxie- Index dieser Polypropylen-Homopolymerisate liegt im Bereich von 80 bis 99 %, vorzugsweise im Bereich von 90 bis 98 %. Die Homopolymerisate sind bekannt und beispielsweise Verstellbar durch das in der DE-A-3730022 beschriebene Polymerisationsverfahren.

Besonders bevorzugt sind Propylen-Homopolymerisate mit einer Molmassenverteilung Mw : Mn im Bereich von 3 bis 5 und einem Schmelzindex MFI 2300C/2,16 kg im Bereich von 10 bis 12 g/10 min (DIN 53 735).

Geeignete Propylen-Homopolymerisate sind beispielsweise erhältlich unter der Handelsbezeichnung Novolen® 1100 N und Novolen® 1125 N (BASF AG).

### Synthese-Kautschuke

Als Synthese-Kautschuke kommen z.B. Ethylenpropylen Mischpolymere oder Butylkautschuke in Betracht.

### Füllstoffe

Weiterhin können die erfindungsgemäßen Inneneinlagen noch Füllstoffe enthalten. Bevorzugt werden FDA-zugelassene Füllstoffe eingesetzt. Im allgemeinen werden anorganische Füllstoffe, beispielsweise Titandioxid, wie z. B. Kronos Titan, Rutil R 902 der Firma Du Pont und RC 566 der Firma Sachtleben, Barium sulfat und Füllstoffe auf Silikatbasis, wie z.B. Talkum, Kaolin, Magnesiumalumiumsilikate, Glimmer u.ä. eingesetzt. Bevorzugt werden Titandioxid und Füllstoffe vom Quarzsand-Typ eingesetzt. Weitere geeignete Additive sind Calciumcarbonat, Diatomeenerde, Calciumstearat

### Weitere Zusätze

In den erfindungsgemäßen Inneneinlagen können noch Polyethylene niedriger Dichte und linearer Struktur vorhanden sein. Beispiele hierfür sind.Escorene^{Û}, Lupolene^{Û} usw.

Weiterhin kommen übliche Additive, wie z.B. innere und äußere Gleitmittel, Antiblockmittel, Stabilisatoren, Antioxidantien, Pigmente, Kristallisationshilfsmittel, und dergleichen in Betracht. Diese Additive werden in den für die Herstellung, Verarbeitung, Konfektionierung und Anwendung notwendigen Mengen in Form von Pulver, Puder, Perlen oder direkt in dem Polymer eingearbeitet eingesetzt. Nähere Angaben zu den üblicherweise eingesetzten Mengen und Beispiele für geeignete Additive sind beispielsweise dem Buch Gächter-Müller, Kunststoffadditive, Carl-Hanser Verlag zu entnehmen.

Besonders vorteilhaft ist es, wenn die Inneneinlage bis zu 0,5 Gew.-%, bezogen auf das Gesamtgewicht des Gemisches, Gleitmittel sowie bis zu 0,2 Gew.-%; bezogen auf das Gesamtgewicht der Inneneinlage, Antiblockmittel, sowie ggf. Antioxidantien und ggf. weitere Verarbeitungsstabilisatoren enthält.

Als Gleitmittel kommen insbesondere primäre und sekundäre Fettsäureamide in Betracht, z.B. Erucasäureamid oder Ölsäureamid..

Die Stabilisatoren dienen vor allem dem Licht- und Wärmeschutz. Demgemäß kommen insbesondere UV- und Wärmestabilsatoren zum Einsatz. Als UV-Stabilisatoren werden beispielsweise sterisch gehinderte Amine eingesetzt. Beispiele sind die unter den Handelsnamen Chimasorb® 944 FD und Tinuvin® 622 LD erhältliche Produkte. Als Wärmestabilisatoren werden sterisch gehinderte Phenole verwendet. Ein Beispiel ist das Handelsprodukt Anox®20.

Als Antioxidantien kommen bevorzugt Phenolderivate zum Einsatz.

### Herstellungsverfahren

Zur Herstellung wird zunächst ein Polyolefin unter Einsatz von Katalysatoren aus der Gruppe der Metallocene hergestellt. Das Polyolefin wird mit einem oder mehreren der oben erwähnten weiteren Stoffe vermischt und anschließend extrudiert und .als Inneneinlage auf die Verschlußoberfläche aufgebracht . Die beschichteten mechanisch dichtenden Verschlusses sind vorzugsweise aus Metall oder Kunststoff und vorwiegend für das Verschließen von Flaschen und Gläser einsetzbar.

Im folgenden wird die Erfindung unter Bezugnahme auf die Beispiele näher beschrieben:

Es werden Inneneinlagen aus folgenden Komponenten hergestellt:

### Beispiel 1:

51,296 T Hochdruck-Polyethylen niedriger Dichte
17 Butyl-Kautschuk
5 T. Talkum
21 T.Polypropylen
5 T. Polybuten
0,12 T. Fettsäureamid
0,28 T. Titanoxid
0,2 T. sterisch gehindertes Phenol
0,o1 T. sterischgehindertes Amin
0,004 T Ruß

### Beispiel 2:

29,8 T.Polyethylen niedriger Dichte und linearer Struktur
24,7 T. Polypropylen
29,8 T.Polyethylen
15 T.Butyl-Kautschuk
0,12 T.Fettsäureamid
0,28 T. Titanoxid
0,2 T. sterisch gehindertes Phenol
0,01 T.sterisch gehindertes Amin

### Herstellungsverfahren

Die Gemische werden extrudiert und anschließend auf die Innenseite eines Gefäßverschlusses gegeben. Nach dem Aushärten ist dieser pasteurisierbar und für den Verschluß von Gefäßen einsetzbar.

## Patentansprüche

1. Mechanisch dichtender Verschluß mit einer Inneneinlage als Dichtungselement für Gefäße, die wenigstens ein Polyolefin , das unter Einsatz von Katalysatoren aus der Gruppe der Metallocene herstellbar ist, enthält,
dadurch gekennzeichnet,
daß die Inneneinlage zusätzlich wenigstens ein Polypropylen-Copolymerisat, das unter Verwendung eines Ziegler-Natta-Katalysatorsystems herstellbar ist, und wenigstens einen Synthese-Kautschuk enthält.

2. Mechanisch dichtender Verschluß mit einer Inneneinlage als Dichtungselement für Gefäße dadurch gekennzeichnet, daß
die Inneneinlage
85 bis 15 Gew.% wenigstens eines unter Einsatz von Katalysatoren aus der Gruppe der Metallocene hergestellten Polyolefins,
15 bis 35 Gew.% wenigstens eines Polypropylen-Copolymerisats, das unter Verwendung eines Ziegler-Natta-Katalysatorsystems herstellbar ist,
0 bis 25 Gew.% wenigstens eines Synthesekautschuks,
0 bis 20 Gew.% an Füllstoffen und
0 bis 5 Gew.% an weiteren Zusatzstoffen enthält.

3. Mechanisch dichtender Verschluß nach Anspruch 2, dadurch gekennzeichnet, daß
die Inneneinlage
25 bis 60 Gew.% wenigstens eines unter Einsatz von Katalysatoren aus der Gruppe der Metallocene bestehenden Polyolefins,
20 bis 25 Gew.% wenigstens eines Polypropylen-Copolymerisats, das unter Verwendung eines Ziegler-Natta-Katalysators herstellbar ist,
10 bis 30 Gew.% wenigstens eines Synthesekautschuks,
10 bis 15 Gew.% an Füllstoffen und
0 bis 5 Gew.% an weiteren Zusatzstoffen enthält.

4. Mechanisch dichtender Verschluß nach einem der Ansprüche 1 bis 3 dadurch gekennzeichnet, daß die Metallocene Cyclopentadienyl-Metall-Komplexe sind.

5. Mechanisch dichtender Verschluß nach einem der Ansprüche 1 bis 4 dadurch gekennzeichnet, daß
die Polyolefine aus Homopolymeren oder Copolymeren des Ethylens oder Propylens herstellbar sind.

6. Mechanisch dichtender Verschluß nach einem der Ansprüche 1 bis 5 dadurch gekennzeichnet, daß
die Inneneinlage zusätzlich wenigstens ein Polyethylen niedriger Dichte und linearer Struktur sowie Stabilisatoren, Gleitmittel, Pigmente oder Füllstoffe enthält.

7. Mechanisch dichtender Verschluß nach einem der Ansprüche 1 bis 6 dadurch gekennzeichet, daß
der Synthesekautschuk Butylkautschuk ist.

8. Verfahren zur Herstellung eines mechanisch dichtenden Verschlusses dadurch gekennzeichnet, daß eine Inneneinlage gemäß einem der Ansprüche 1 bis 7 auf die Verschlußoberfläche aufgebracht wird.

## Claims

1. Closure giving a tight mechanical seal with an insert on its inner side as a sealing element for containers, said insert comprising at least one polyolefin, which can be prepared using catalysts selected from the class consisting of the metallocenes,
characterized in that
the insert additionally contains at least one polypropylene copolymer obtainable by using Ziegler-Natta catalyst systems and at least one synthetic rubber.

2. Closure giving a tight mechanical seal with an insert on its inner side as a sealing element for containers,
characterized in that
the insert comprises
from 85 to 15 % by weight of at least one polyolefin prepared using catalysts selected from the class consisting of the metallocenes,
from 15 to 35 % by weight of at least one polypropylene copolymer obtainable by using Ziegler-Natta catalyst systems,
from 0 to 25 % by weight of at least one synthetic rubber,
from 0 to 20 % by weight of fillers and
from 0 to 5 % by weight of further additives.

3. Closure giving a tight mechanical seal according to claim 2,
characterized in that
the insert comprises
from 25 to 60 % by weight of at least one polyolefin prepared using catalysts selected from the class consisting of the metallocenes,
from 20 to 25 % by weight of at least one polypropylene copolymer obtainable by using Ziegler-Natta catalyst systems,
from 10 to 30 % by weight of at least one synthetic rubber,
from 10 to 15 % by weight of fillers and
from 0 to 5 % by weight of further additives.

4. Closure giving a tight mechanical seal according to any of claims 1 to 3, characterized in that the metallocenes are cyclopentadienyl metal complexes.

5. Closure giving a tight mechanical seal according to any of claims 1 to 4, characterized in that the polyolefins can be prepared from homopolymers or copolymers of ethylene or propylene.

6. Closure giving a tight mechanical seal according to any of claims 1 to 5, characterized in that
the insert additionally contains a low-density polyethylene of linear structure, and also stabilizers, lubricants, pigments or fillers.

7. Closure giving a tight mechanical seal according to any of claims 1 to 6, characterized in that
the synthetic rubber is butylene rubber.

8. Process for producing a closure giving a tight mechanical seal, characterized in that an insert according to claims 1 to 7 is applied on the surface of the closure.

## Revendications

1. Fermeture pour assurer mécaniquement une étanchéité de récipients, comportant, comme élément d'étanchéification, une garniture intérieure qui contient au moins une polyoléfine qui peut être préparée par mise en oeuvre de catalyseurs du groupe des métallocènes, caractérisée en ce que la garniture intérieure contient en supplément au moins un copolymère de polypropylène, qui peut être préparé par utilisation d'un système catalytique de Ziegler-Natta, et au moins un caoutchouc de synthèse.

2. Fermeture pour assurer mécaniquement une étanchéité de récipients, comportant, comme élément d'étanchéification, une garniture intérieure, caractérisée en ce que la garniture intérieure contient
85 à 15% en poids d'au moins une polyoléfine préparée par mise en oeuvre de catalyseurs du groupe des métallocènes,
15 à 35% en poids d'au moins un copolymère de polypropylène, qui peut être préparé par l'utilisation d'un système catalytique de Ziegler-Natta,
0 à 25% en poids d'au moins un caoutchouc de synthèse,
0 à 20% en poids de charges, et
0 à 5% en poids d'autres additifs.

3. Fermeture pour assurer mécaniquement une étanchéité suivant la revendication 2, caractérisée en ce que la garniture intérieure contient
25 à 60% en poids d'au moins une polyoléfine préparée par mise en oeuvre de catalyseurs du groupe des métallocènes,
20 à 25% en poids d'au moins un copolymère de polypropylène, qui peut être préparé par utilisation d'un catalyseur de Ziegler-Natta,
10 à 30% en poids de caoutchouc de synthèse,
10 à 15% en poids de charges, et
0 à 5% en poids d'autres additifs.

4. Fermeture pour assurer mécaniquement une étanchéité suivant l'une des revendications 1 à 3, caractérisée en ce que les métallocènes sont des complexes de cyclopentadiényle-métal.

5. Fermeture pour assurer mécaniquement une étanchéité suivant l'une des revendications 1 à 4, caractérisée en ce que les polyoléfines peuvent être préparées à partir d'homopolymères ou de copolymères de l'éthylène ou du propylène.

6. Fermeture pour assurer mécaniquement une étanchéité suivant l'une des revendications 1 à 5, caractérisée en ce que la garniture intérieure contient en supplément au moins un polyéthylène de basse densité et de structure linéaire ainsi que des agents stabilisants, des agents lubrifiants, des pigments ou des charges.

7. Fermeture pour assurer mécaniquement une étanchéité suivant l'une des revendications 1 à 6, caractérisée en ce que le caoutchouc de synthèse est du caoutchouc butyle.

8. Procédé de préparation d'une fermeture pour assurer mécaniquement une étanchéité, caractérisé en ce qu'une garniture intérieure selon l'une des revendications 1 à 7 est appliquée sur la surface de la fermeture.
